# EUROPEAN PATENT APPLICATION

(11) **EP 2 214 036 A1**
(43) Date of publication of application: **04.08.2010**
(21) Application number: 09275004.1
(22) Date of filing: 28.01.2009
(51) Int. Cl.: G02B 3/14

(54) **Fluidic lens**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A fluidic lens for use with IR light is provided having an optically transparent cavity containing a liquid perfluorocarbon contained within the cavity at least in part by an optically transparent flexible membrane whose surface profile may be varied by applying a variable pressure to the liquid within the cavity.

## Description

This invention relates to fluidic lenses and in particular, but not exclusively, to a fluidic lens for a miniature infra-red (IR) imaging device.

A variable focus fluidic lens has been described for example in "Variable-focus liquid lens", H. Ren et al, Optics Express Vol. 15, No. 10, 5931-5936, 14 May 2007. The fluidic lens in that case is based upon a pressure-induced liquid redistribution within a lens cell. The liquid used is pure water. However, water is known to absorb IR radiation with wavelengths in the range of 3-5µm and therefore a different liquid is required for operation at such wavelengths.

In selecting a suitable substance for use in a fluidic lens at IR wavelengths, besides having high optical transmission over the required range of wavelengths, various other criteria may be applied. For example, the liquid should have low levels of viscosity to enhance its dynamic behaviour, remain in the liquid state throughout a required operational temperature range, be chemically inert and stable and have a high refractive index to enhance optical power at a given lens surface curvature. Furthermore, the substance should not be toxic. This has been recognised as an exacting list of criteria and it has proven difficult to find a substance suitable for use in a fluidic lens at IR wavelengths, in particular in the 3-5µm region. Molecular vibration modes result in absorption bands throughout the IR region in many potential candidate substances that might otherwise be useful with light of visible wavelengths.

From a first aspect, the present invention resides in a fluidic lens, having an aperture for the passage of light through the lens, a optically transparent cavity, located within the aperture, containing an optically transparent liquid that is contained within the cavity at least in part by an optically transparent flexible membrane extending across the aperture, and access means to the cavity for applying a variable pressure to the liquid within the cavity to thereby distort the flexible membrane, wherein the liquid is a perfluorocarbon compound.

In a preferred embodiment, the perfluorocarbon compound is saturated and may comprise C₁₀F₁₈ (Perfluorodecalin) or CF₃(CF₂)₆CF₃ (Perfluorooctane), for example.

In a further preferred embodiment the perfluorocarbon compound has unsaturation exclusively in the form of one or more carbon-carbon double bonds. Amongst such compounds, C₆F₁₀(CF₃)₂ (Perfluoro-1,3-dimethylcyclohexane) has been found to perform well in the fluidic lens of the present invention.

The fluidic lens of the present invention may be used in association with a lens of fixed focal length such that the fluidic lens provides auxiliary focus control for the fixed lens.

Preferably, the fluidic lens in preferred embodiments of the present invention is for use with light of wavelength in the range 3-5µm.

A fluidic lens according to a preferred embodiment of the present invention will now be described in more detail, by way of example only, with reference to the accompanying drawings, of which:

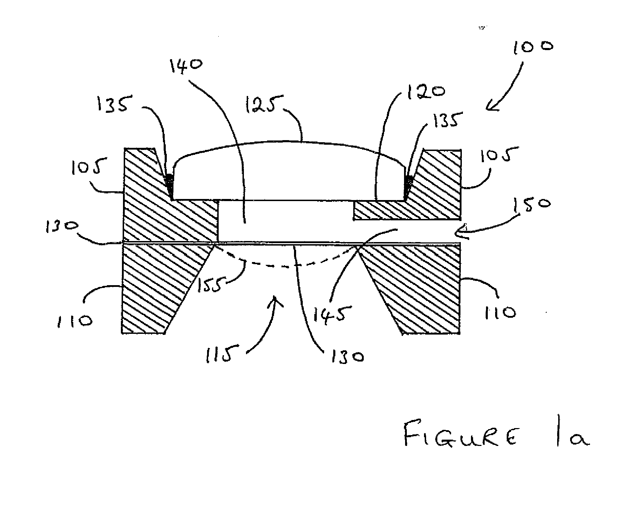

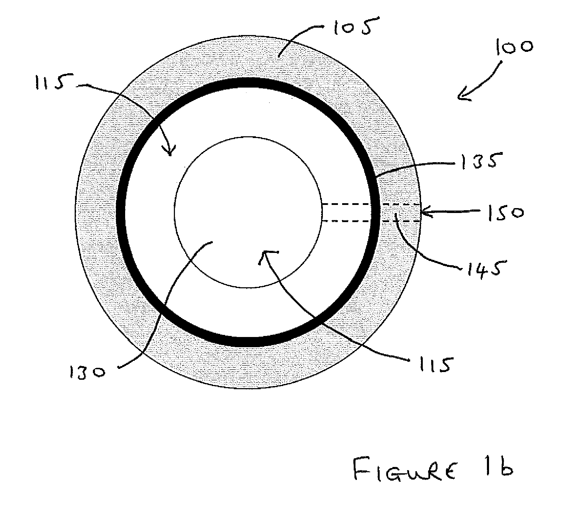

Figure 1 shows a cross-section and a plan view of a fluidic lens assembly according to a preferred embodiment of the present invention.

A fluidic lens assembly according to a first preferred embodiment of the present invention will now be described with reference to Figure 1. The lens assembly in this embodiment is a compound lens assembly comprising a fluidic lens in combination with a conventional fixed lens such that the fluidic lens is arranged to provide auxiliary focus control for the fixed lens.

Referring to Figure 1a and Figure 1b, a lens assembly 100 is shown in a cross-sectional view and a plan view respectively to comprise a circular housing 105 having an upper annular section 105 and a lower annular section 110, each section providing a circular aperture 115 of similar diameter to allow for the passage of light through the assembly 100. The upper annular section 105 has a stepped profile to provide a mounting surface 120 on which is mounted a conventional fixed-focus lens 125, made preferably from Zinc Selenide (ZnSe), of focal length 25.4mm and diameter 12.7mm. A thin membrane 130 of a flexible material, preferably with elastomeric properties, that is optically transparent at the intended wavelengths of operation is sandwiched between the upper section 105 and the lower section 110 of the housing so that the transparent flexible membrane 130 extends across the aperture 115 and is clamped by the annular sections 105, 110 when they are fixed together (using bolts for example, not shown in Figure 1), so providing a good liquid seal. The lens 125 is encircled by a fillet of a sealant 135 to both retain the lens in the upper section 105 of the housing and to provide a liquid seal around the lens 125.

The clamped transparent flexible membrane 130 and the lens 125 provide a liquid seal across the aperture 115 and, together with the inner walls of the housing, define a cavity 140 within the assembly 100 which is filled with a selected liquid. A channel 145 is provided in the upper section 105 of the housing which extends from the cavity 140 to an opening 150 in the side of the housing 100. The channel 145 and the opening 150 may be used to fill the cavity 140 with the liquid, but its principal purpose is to enable a variable pressure to be applied to the liquid within the cavity 140. Application of pressure to the liquid in the cavity 140 causes the liquid to be displaced within the cavity 140 and surface of the transparent flexible material layer 135, where it extends across the aperture 115, to become convex, as indicated for example by the line 155 in Figure 1, so forming a lens. The curvature of the convex surface of the membrane 130 and hence the focal length of the fluidic lens may be adjusted by varying the pressure applied to the liquid via the opening 150. This pressure may be applied manually to the liquid via the opening 150 or it may be automated using a conventional actuator or by other means as would be apparent to a person of ordinary skill in the relevant art.

A list of the desirable properties for a liquid suited to use with an IR fluidic lens has been presented in the introductory part of this patent specification. The inventors in the present case have found several liquids that appear to be particularly suited to use at IR wavelengths in a fluidic lens according to this preferred embodiment of the present invention. Those liquids found to be suited include certain fluorocarbon compounds, in particular C₆F₁₀(CF₃)₂ (Perfluoro-1,3-dimethylcyclohexane), C₁₀F₁₈ (Perfluorodecalin) and CF₃(CF₂)₆CF₃ (Perfluorooctane). Each of these compounds has been selected in particular for its high level of transmission of light of wavelengths in the 3-5µm range. These compounds are also highly stable, inert, hydrophobic and non-toxic (finding use in many medical applications), although their refractive index is relatively low.

The material selected for the flexible membrane 130 preferably comprises the elastomer state of Poly(dimethysiloxane), PDMS. This material has been found to have good mechanical properties, bio-compatibility, a non-toxic nature and low fluorescence under laser radiation. Preferably an optically clear version of PDMS supplied by Dow Corning® under product name Sylgard 184 may be used for the membrane 130. This product is made from a two-part mix and is stable and flexible from -50°C to +200°C. Films of high quality can be prepared by casting the elastomer between two optically flat plates.

Whereas a material with elastomeric properties is to be preferred for the flexible membrane 130, an alternative material such as Baader Planetarium's TurboFilm may be used. This is a very thin film (∼12 µm thickness) and has exceptionally good optical uniformity. It has been shown to have good transmission levels between the wavelengths of 2.5 µm (4000 cm-1) and 5 µm (2000 cm-1). It is not however an elastomer, and when used in the flexible membrane 130 is preferably mounted onto a carrier layer before being incorporated into the lens assembly.

Preferably, when filling the cavity 140 with the liquid, a second small aperture is used for the filling procedure; one aperture (150) to feed the liquid into the main cavity 140, whilst the other aperture acts as an air outlet and reduces the risk of air pockets being formed.

Experimental results have shown that by focussing a collimated laser beam, the focal length of the ZnSe/fluidic lens of Figure 1 was observed to decrease from 25.4 to 24.1 mm. This implies that the 'activated' fluidic lens itself has an impressively short focal length of less than 50 cm, and allows the object plane to be adjusted seamlessly from ∞ down to 50 cm.

Whereas a compound lens has been described in this preferred embodiment of the present invention, the fixed lens may be replaced by a plane optically transparent window and the fluidic portion of the lens assembly 100 may be used in isolation.

## Claims

1. A fluidic lens, having an aperture for the passage of light through the lens, a optically transparent cavity, located within the aperture, containing an optically transparent liquid that is contained within the cavity at least in part by an optically transparent flexible membrane extending across the aperture, and access means to the cavity for applying a variable pressure to the liquid within the cavity to thereby distort the flexible membrane, wherein the liquid is a perfluorocarbon compound.

2. The fluidic lens according to claim 1, wherein the perfluorocarbon compound is saturated.

3. The fluidic lens according to claim 2, wherein the perfluorocarbon compound comprises C₁₀F₁₈ (Perfluorodecalin).

4. The fluidic lens according to claim 2, wherein the perfluorocarbon compound comprises CF₃(CF₂)₆CF₃ (Perfluorooctane).

5. The fluidic lens according to claim 1, wherein the perfluorocarbon compound has unsaturation exclusively in the form of one or more carbon-carbon double bonds.

6. The fluidic lens according to claim 5, wherein the perfluorocarbon compound comprises C₆F₁₀(CF₃)₂ (Perfluoro-1,3-dimethylcyclohexane).

7. The fluidic lens according to any one of the preceding claims, further comprising a lens of fixed focal length and wherein the fluidic lens thereby provides auxiliary focus control for the fixed lens.

8. The fluidic lens according to any one of the preceding claims, for use with light of wavelength in the range 3-5µm.
